# EUROPEAN PATENT SPECIFICATION

(11) **EP 3 757 172 B1**
(45) Date of publication and mention of the grant of the patent: **09.08.2023**
(21) Application number: 19182328.5
(22) Date of filing: 25.06.2019
(51) Int. Cl.: C09C 1/50, B60C 1/00, C08K 3/04, C08L 21/00

(54) **A PROCESS FOR PRODUCING CARBON BLACK AND RELATED FURNACE REACTOR**
VERFAHREN ZUR HERSTELLUNG VON RUSS UND VERWANDTER OFENREAKTOR
PROCÉDÉ DE PRODUCTION DE NOIR DE CARBONE ET RÉACTEUR DE FOUR ASSOCIÉ

(43) Date of publication of application: 30.12.2020
(73) Proprietor: Orion Engineered Carbons GmbH, 65760 Eschborn (DE)
(72) Inventor: MERGENTHALER, Pieter, 50676 Köln (DE); SCHINKEL, Arndt, 56269 Marienhausen (DE); TSATSARONIS, George, 10587 Berlin (DE)
(74) Representative: Fabry, Bernd

(56) References cited:
- EP-A1- 1 529 818
- WO-A1-2016/030495
- WO-A1-2018/165483
- US-A1- 2016 355 686

## Description

### AREA OF INVENTION

The present invention refers to the area of carbon blacks and covers a process for producing it, a carbon black of low porosity, its use and a furnace reactor to obtain the products.

### BACKGROUND OF THE INVENTION

Carbon black is the state-of-the-art reinforcing material in rubber compositions. Due to its morphology, such as specific surface area and structure, various physical properties of end products, such as wear performance, rolling resistance, heat built-up, and tear resistance of tires are affected. The wear performance is particularly important for bus and truck tires, where the tires have to deal with very heavy loads. In truck or bus tread compounds finely dispersed carbon black particles are necessary for achieving a very high level of wear performance. Carbon black is also widely used as pigment. Due to its color and electrical conductivity it is part of many applications such as coatings, inks and paints as well as plastic materials.

### RELEVANT PRIOR ART

From the state of the art a multitude of processes for producing carbon blacks (also called furnace blacks) with different properties are known; for example:
EP 0754735 B1 (DEGUSSA) discloses an improved carbon black and a process for producing them. The improved carbon blacks distinguished from conventional blacks having the same CTAB surface, after incorporation into SSBR/BR rubber compositions, by a lower rolling resistance with equal or better wet skid behavior. They can be produced in conventional carbon black reactors by conducting the burning in the combustion chamber so that carbon nuclei form and are immediately brought into contact with the carbon black raw material.

EP 1078959 B1 (EVONIK) refers to a furnace carbon black which has a hydrogen (H) content of greater than 4000 ppm and a peak integral ratio of non-conjugated H atoms to aromatic and graphitic H atoms of less than 1.22. The furnace carbon black produced by injecting the liquid carbon black raw material and the gaseous carbon black raw material at the same point in a furnace process.

EP1233042 B1 (DEGUSSA) refers to carbon black with a CTAB surface area from about 10 to 35 m2/g and DBP absorption from about 40 to 180 ml/100 g, the ΔD50 value being at least 340 nm. The carbon black may be produced in a furnace-black reactor from a liquid carbon black raw material and gaseous carbon black material injected into a constriction in the reactor. Compared to other forms of carbon black, the respective products have advantageous properties, such as improved dispersibility, and may be economically and conveniently used in rubber mixtures, particularly in those used to produce extrusion profiles.

EP 1489145 B1 (EVONIK) suggests a process for the production of furnace black by producing a stream of hot combustion gases in a combustion chamber, feeding the hot combustion gases along a flow axis from the combustion chamber through a reactor narrow point into a reaction zone, mixing carbon black raw material into the flow of the combustion gases in front of, inside or behind the reactor narrow point and stopping carbon black formation downstream in the reaction zone by spraying in water, steam being jetted in axially through the gas burner and optionally at the radial oil nozzles and beaded carbon black being introduced before and/or after the reactor narrow point.

EP 2361954 B1 (EVONIK) relates to a carbon black with a CTAB surface area of from 20 to 49 m2/g, with a COAN greater than 90 ml/(100 g), and with a sum of OAN and COAN greater than 235 ml/(100 g). The carbon black is produced in a furnace reactor, where from 20 to 55 percent by weight of the feedstock used for the carbon black are introduced radially through a nozzle within the first third of the reaction zone, and the remaining amount of the feedstock used for the carbon black is introduced through a nozzle upstream at least one further point into the reactor. The carbon black can be used in rubber mixtures.

EP 2479223 A1 (EVONIK) describes a method for producing furnace black in a furnace black reactor comprising a combustion zone along a reactor axis, a reaction zone and a termination zone, comprises producing a stream of hot exhaust gas in the combustion zone by completely burning a fuel in an oxygen-containing gas, passing the exhaust gas from the combustion zone through the reaction zone into the termination zone, mixing a carbon black raw material into the hot exhaust gas into the reaction zone, and stopping the reaction between carbon black and the hot exhaust gases in the termination zone by spraying water.

EP 2563864 A1 (BIRLA) discloses a reactor for manufacturing carbon black, said reactor comprising flow guide means provided between a fuel burner and an air inlet for altering the flow path of combustion air entering at the air inlet to result in a better mixing between the fuel and the combustion air, thereby, producing higher temperature hot combustion gases which are subsequently received in a reaction chamber where they react with a carbonaceous feedstock to produce carbon black. The reactor increases the carbon black production up to 20 percent. Further, the positioning of the flow guide means stabilizes the flame from the fuel burner to maintain it along the reactor axis, thus, increasing the life of the refractory lining.

WO 2018 165483 A1 (MONOLITH) teaches heating the thermal transfer gas by Joule heating before bringing said gas into contact with a hydrocarbon feedstock using for example heating elements made from graphite or tungsten. The process is low in carbon dioxide emission, however, since the carbon black is produced from a plasma the carbon blacks thus obtained are of low quality and do not match with the specifications for example for rubbers used in tire industry. The patent does not disclose a combination of pre-combustion chamber and choke area.

The following references concern carbon blacks with different particles size distributions obtained from processes using specific furnace reactors:
For example EP 0546008 B1 (CABOT) refers to improved carbon black that is characterized by the following multitude of features: a CTAB value of greater than 155 m²/g, an iodine number of greater than 180 mg/g; an N₂ SA value of greater than 160 m²/g; a tint value of greater than 145 %; a CDBP value of 90 to 105 cc/100g; a DBP value of 155 to 140 cc/100g; a ΔDBP = DBP - CDBP value of 20 to 35 cc/100g; a ΔD50 value of less than 40 nm; a Dmode of 40 to 65 nm; a ΔD50/Dmode ratio of 0.55 to 0.67; and an ASTM aggregate volume of less than 1376.000 nm³. The carbon black is obtained using a modular, also referred to as "staged", furnace reactor.

Also, EP 0608892 B1 (BRIDGESTONE) discloses a specific furnace reactor for making carbon black. The combustion chamber is connected with a Venturi portion which opens conically to the reaction chamber. However, the dimensions of this reactor are different compared to the modified reactor of the present invention. Especially the choke area has a diameter to length ratio larger than 1. The carbon black compositions exhibit ΔD50/Dmode values of 0.61 to 0.79.

According to EP 0792920 A1 (MITSUBISHI) a carbon black showing a ΔD50/ Dmode ratio of only 0.47 to 0.53 is obtained using a furnace reactor with long choke (d/l = 0.1 to 0.8), but with-out Venturi section.

A very similar teaching is obtained from EP 0982378 A1 (MITSUBISHI), disclosing carbon black with very narrow ASD, but with very small particle sizes of at most 13 nm, which is obtained from a reactor with a very long choke section. The process also requires specific oxygen concentrations at feedstock injection of at most 3 Vol.-%, preferably 0.05 to 1 Vol.- %.

EP 1529818 A1 (EVONIK) refers to a carbon black with an OAN, measured on the beaded carbon black, of less than 120 ml/100 g. A process for the preparation of the carbon black is described, wherein a salt solution is converted into an aerosol and this is then introduced into the carbon black formation zone. The carbon black can be used in inks, paints, lacquers, printing inks and ink-jet inks, and for coloring plastics.

EP 3060609 A1 (ORION) refers to a carbon black composition showing a narrow Aggregate Size Distribution (ASD) characterized by a ΔD50/Dmode value of about 0.58 to about 0.65 and a Relative Span (D90-D10)/D50 of about 0.5 to about 0.8, which is obtainable by means of a modified furnace reactor, which characterized that the combustion chamber and the choke area is connected by a tube of constant diameter.

International patent application WO 2013 015368 A1 (BRIDGESTONE) discloses a carbon black characterized by the standard deviation of the aggregate distribution of the carbon black obtained by a light scattering method. The furnace reactor is characterized by a cylindrical reaction zone.

WO 2016 030495 A1 (ORION) relates to a furnace black having a STSA surface area of at 130 m²/g to 350 m²/g wherein the ratio of BET surface area to STSA surface area is less than 1.1 if the STSA surface area is in the range of 130 m²/g to 150 m²/g, the ratio of BET surface area to STSA surface area is less than 1.2 if the STSA surface area is greater than 150 m²/g to 180 m²/g, the ratio of BET surface area to STSA surface area is less than 1.3 if the STSA surface area is greater than 180 m²/g, and the STSA surface area and the BET surface area are measured according to ASTM D 6556 and to a furnace process wherein the stoichiometric ratio of combustible material to O₂ when forming a combustion gas stream is adjusted to obtain a k factor of less than 1.2 and the inert gas concentration in the reactor is increased while limiting the CO₂ amount fed to the reactor. Also provided is an apparatus for conducting the process according to the present invention.

French patent application FR 2653775 A1 (TOKAI CARBON) also relates to a method for producing a carbon black having a BET value of 125 to 162 m²/g and a ΔD50/Dmode ratio of 0.55 to 0.66.

US patent US 5,254,325 (NIPPON STEEL) discloses a reactor for producing carbon black with a throat for maintaining the hot gas in a piston flow state.

US 2016355686 A1 (CABOT) concerns high structured carbon blacks, methods of synthesis and treatment, and dispersions and inkjet ink formulations prepared therefrom. The carbon black can have the following properties: OAN greater than or equal to170 mL/100 g; and STSA ranging from 160 to 220 m2/g. The carbon black can also have the following properties: OAN greater than or equal to170 mL/100 g; and a ratio of STSA/BET surface area ranging from 0.7 to 1.

Japanese patent application JP 2001 240 768 A1 (MITSUBISHI) refers to a carbon black obtained from a furnace reactor with a very long choke area of at least 500 mm for use in paints having an average particle diameter of 16 nm or less, that is after-treated with nitric acid.

### OBJECT OF THE INVENTION

Typically, combustible gases as for example natural gas is introduced along with an oxidant as for example oxygen or air into a pre-combustion chamber. The combustion takes place at temperatures of up to 2,700 °C. The hot combustion gases thus obtained are introduced into a furnace reactor ("Choke area") and react with hydrocarbons to form carbon black. This process is also low in carbon dioxide formation, but produces carbon blacks of high quality.

Unfortunately, the combustion reaction is accompanied by various side-reactions according to which carbon monoxide and carbon dioxide are formed, which means that a part of the carbon source gets lost, what increases the carbon dioxide emissions of the overall process significantly. Formation of carbon monoxide and carbon dioxide during the combustion process has a disadvantageous effect on products thus obtained, since particularly at high reaction temperatures the carbon blacks show a high porosity which makes them unsuitable for quite a number of applications.

Therefore, it has been one object of the present invention providing on one hand a process which reduces the loss of carbon via formation of gaseous carbon containing products and on the other hand leads to a carbon black quality of low porosity.

Another object of the invention is to provide a process with a carbon quality of varying porosity.

### BRIEF DESCRIPTION OF THE INVENTION

A first object of the present invention refers to a process for obtaining a carbon black composition, comprising or consisting of the following steps:
(A) subjecting a hydrocarbon raw material into a high temperature combustion gas stream in order to achieve thermochemical decomposition,
(B) cooling the reaction gases and
(C) recovering of the carbon black thus obtained,

wherein said combustion gas stream consists of at least one oxidant and at least one fuel component,
   (i) at least a part of said oxidant and/or said fuel component is subjected to an electrical pre-heating step before it is introduced into the pre-combustion chamber to form a high temperature combustion gas stream;
   (ii) said high-temperature combustion gas stream of step (i) is transferred into a choke area for combustion; and
   (iii) and the combustion products obtained in step (ii) are transferred into a reaction tunnel including a terminating zone to form carbon black particles to be recovered,
and wherein the process is conducted in the furnace reactor, said reactor comprising or consisting of the following elements:
   - a pre-combustion chamber;
   - a choke area;
   - a reaction tunnel;
   - a terminating zone;
   - at least one electrical preheating device, and
   - a heat exchanger,
wherein
   (a) the pre-combustion chamber contains inlets for oxidants and fuel components, is capable for producing hot combustion gases and is connected to the choke area;
   (b) the choke area contains at least one inlet for the hydrocarbon raw material and is connected to the reaction tunnel;
   (c) the reaction zone is capable of forming the carbon black aggregates and is connected to the terminating zone,
   (d) the terminating zone contains
      (d1) at least one, preferably two, three, four or a multitude of nozzles for introducing the quenching agent or
      (d2) is connected to at least one heat exchanger,
      and is capable of cooling the carbon black aggregates,
   (e) the outlet of the terminating zone is connected with a heat exchanger capable of transferring at least part of the thermal energy of the carbon black to the oxidant/and or fuel component to warm them up;
   (f) said warmed stream of oxidants and/or fuel components is introduced into a pre-heating device, preferably an electric pre-heating device to be heated before being introduced into the pre-combustion chamber; and optionally,
   (g) at least one additional pre-heating device is present for pre-heating
      (g1) the hydrocarbon material before introduction into the choke area and/or
      (g2) the reaction gases after leaving the pre-combustion chamber and before entering the terminating zone;
   (h) preheated reaction gases introduced into the reaction tunnel, and
   (i) preheated reaction gases introduced into the area behind the terminating zone.

It has been found that introducing the gaseous oxidants and/or the gaseous fuel components into the pre-combustion chamber after passing a pre-heating device increases the temperature in the pre-combustion chamber significantly and reduces the amount of carbon monoxide that is formed in a side reaction.

### PREFERRED EMBODIMENTS OF THE INVENTION

In a preferred embodiment of the present invention the gaseous oxidants and/or fuel components are warmed up after passing a heat exchanger before entering the pre-combustor.

In another preferred embodiment of the present invention only a part of the oxidant and/or fuel component is subjected to preheating, which means that a stream of preheated oxidant and or preheated fuel component is blended with a stream of oxidant or fuel component showing a lower temperature. Such blending can take place either before or entering the pre-combustion chamber or in the pre-combustion chamber.

In a particular preferred embodiment, the oxidant is subjected to preheating and is mixed with a fuel component of lower temperature or vice-versa.

In another preferred embodiment the oxidant is air which is subjected to pre-heating before blending with a fuel component of lower temperature.

Due to the much lower CO level the carbon black finally obtained from the process shows the desired low porosity. Additional advantages come from the fact that the new plant allows a compact structure and a serious variability of mass transport as well as an improved controllability of the reaction temperature.

For the sake of good order, it should be pointed out that the present invention has the intention to produce carbon black of low porosity. However, a skilled person will be able to modify the furnace reactor in a way that it is also possible to obtain carbon blacks of high porosity, for example by enlarging the residence time in the reaction zone or by modifying the quenching conditions.

The process as described above comprises
(a) a combustion step;
(b) a reaction step and
(c) a step for terminating the reaction, may be the same as for a conventional process.

### Oxidants and fuel agents

Specifically, in the combustion step, in order to form a high temperature combustion gas, at least one oxidant and at least one fuel agent will be mixed and burned (this zone is called a combustion zone).

The oxidant is gaseous and may be oxygen, ozone, hydrogen peroxide, nitric acid, nitrogen dioxide or nitrous oxide. In the alternative, an oxidant-containing gas stream may be air, oxygen- depleted or oxygen-enrichedair, oxygen, ozone, a gas mixture of hydrogen peroxide and air and/or nitrogen, a gas mixture of nitric acid and air and/or nitrogen, a gas mixture of nitrogen dioxide or nitrous oxide and air and/or nitrogen, and a gas mixture of combustion products of hydrocarbons and oxidants.

Adding nitrogen to the gaseous combustion media is of advantage since this supports the effect of low porosity of the resulting carbon black
As the fuel component, which can be liquid, but is preferably gaseous, hydrocarbons, hydrogen, carbon monoxide, natural gas, coal gas, petroleum gas, a petroleum type liquid fuel such as heavy oil, or a coal derived liquid fuel such as creosote oil, fuel oil, wash oil, anthracene oil and crude coal tar may be used.

The combustion zone is desired to be a sufficiently high temperature atmosphere so that the raw material hydrocarbon can be uniformly vaporized and thermochemically decomposed, and therefore the pre-combustion chamber is typically operated at a temperature ranging from about 1,000 to about 2,700 °C, preferably from about 1,200 to about 2,200 °C and more preferably from about 1,400 to about 2,000 °C. Most preferably said pre-combustion chamber is operated at about 1,900 °C, about 2,100 °C, about 2,300 °C, about 2,400 °C, about 2,500 °C or about 2,600 °C.

Another condition desired for the combustion zone is to suppress the oxygen concentration in the combustion gas as far as possible. If oxygen is present in the combustion gas, partial combustion of the raw material hydrocarbon is likely to take place in the reaction zone, whereby non-uniformity in the reaction zone is likely to result.

The oxygen concentration in the combustion gas is adjusted by the k-factor. The k-factor is used as an index number to characterize the excess air. It represents the ratio between the amount of air which for stoichiometric combustion is needed and the real amount of air which is used for the combustion. Preferably the k-factor is adjusted from 0.3 to 1.0, more preferably from 0.6 to 0.9, most preferably 0.7 to 0.85. The amount of combustion air is typically about 2,500 to about 40,000 Nm³/h, and more preferably about 8,000 to about 20,000 Nm³/h and 10,000 to about 15,000 Nm³/h, while its temperature ranges typically from about 300 to 900 °C.

The gaseous and liquid or gaseous fuel can be added via one or more burner lances. The liquid fuel can be added through one or more burner lances and can be atomized by pressure, steam, nitrogen or compressed air or any other atomizing agent known to the person skilled in the art. It is also possible using solid fuel components, which can be supplied by one or more metering screws.

### Hydrocarbon raw material

In the reaction step, a raw material hydrocarbon is introduced into the high temperature combustion gas stream obtained in the combustion step, as it is jetted from a burner provided in parallel with or in a transverse direction to the high temperature combustion stream, whereupon the raw material hydrocarbon is thermochemically decomposed and converted to carbon black (this zone is called a reaction zone). It is common to provide a choke area in the reaction zone in order to improve the reaction efficiency.

The hydrocarbon raw material may be solid, liquid or gaseous. The hydrocarbon raw material may be a mixture of liquid aliphatic or aromatic, saturated or unsaturated hydrocarbons or mixtures thereof, distillates of coal tar or residual oils resulting from the catalytic cracking of petroleum fractions or from the production of olefins by cracking methods. The hydrocarbon raw material can be a mixture of gaseous hydrocarbon raw materials, for example gaseous aliphatic, saturated or unsaturated hydrocarbons, mixtures thereof or natural gas.

Preferably the raw material represents an aromatic hydrocarbon such as anthracene, CTD (Coal Tar Distillate), ECR (Ethylene Cracker Residue) or a petroleum type heavy oil such as FCC oil (fluidized catalytic decomposition residual oil) or heavy cooker gas oil and crude coal tar.

The carbon black raw material may contain renewable carbon black raw material. The carbon black raw material can be a renewable raw material, such as biogas, rapeseed oil, soybean oil, palm oil, and sunflower oil, oils from nuts or olive oil, or coal dust.

### Formation of carbon black

The invention process is not limited to specific reactor geometry. Rather, it can be adapted to different reactor types and sizes. Usually, the furnace reactor is operated at a temperature ranging from about 1,000 to about 2,500 °C, preferably from about 1,200 to about 2,000 °C and more preferably from about 1,400 to about 2,000 °C. Most preferably the reactor is operated at about 1,500 °C, about 1,600 °C, about 1,700 °C, about 1,800 °C or 1,900 °C- depending on the temperature in the pre-combustion chamber and other reaction conditions. It is possible to let the hot combustion gases pass another pre-heater before entering the choke area.

By means of the hot combustion gases the raw material is oxidized to form carbon black and carbon monoxide and carbon dioxide and water. Suitable reactor forms are for example disclosed in the previous chapter describing the prior art and thereby are incorporated by reference.

The carbon black raw materials can be injected by means of radial and/or axial lances. The solid carbon black raw material can be dispersed in the carbon black raw material. The liquid carbon black raw material can be atomized by pressure, steam, nitrogen or compressed air.

Choke area and reaction tunnel are forming the so-called reaction zone. The introduction of the raw material hydrocarbon into the reaction zone is preferably carried out so that the raw material is finely sprayed and uniformly dispersed in the furnace so that oil drops of the raw material hydrocarbon can uniformly be vaporized and thermochemically decomposed. As a method for fine spraying, it is effective to employ a method of atomizing by the combustion gas stream. The flow rate of the combustion gas at the position for introduction of the raw material hydrocarbon is preferably at least 250 m/sec, more preferably from 300 to 800 m/sec and most preferably from 450 to 550 m/sec. Further, in order to uniformly disperse the raw material in the furnace, introduction of the raw material is preferably carried out in such a manner that the raw material hydrocarbon is introduced into the furnace from one nozzle or multiple nozzles, more preferably from 3 to 12 and more particularly from 4 to 16 nozzles.

The aggregate is believed to be formed in such a manner that the raw material hydrocarbon is uniformly vaporized and thermochemically decomposed, whereby nuclei of a precursor will form and mutually collide to one another to fuse and be carbonized to form the aggregate. Accordingly, it is considered to be advisable that the aggregate formation zone is free from a highly turbulent site due to e.g. a change in the flow path such as in a choke area. In the step for terminating the reaction, the high temperature reaction gas is cooled to a level of not higher than 1,200 to 800 °C by e.g. water spray (this zone is called a quench section). In the alternative, quenching can also take place by leading the products to one or more heat exchangers. The cooled carbon black can be recovered by a conventional process, for example, by a process of separating it from the gas by means of e.g. a collecting bag filter. Typically, the temperature at the outlet of the reactor is about 500 to about 1,000 °C.

### DETAILED DESCRIPTION OF THE PROCESS

The present invention refers to a process, wherein the reaction is conducted in a furnace reactor comprising at least
(a) a pre-combustion chamber;
(b) a choke area;
(c) a reaction tunnel;
(d) a terminating zone,
(e) an electrical preheating device, and optionally
(f) a heat exchanger.

The process in its preferred embodiment(s) is characterized in that
(i) at least one oxidant and at least one fuel component are introduced into the pre-combustion chamber, and said chamber is operated at a temperature ranging from about 1,000 to about 2,500 °C to produce a high temperature combustion gas stream that is transferred into the choke area;
(ii) the hydrocarbon raw material is - optionally after being pre-heated to a temperature ranging from about 100 to about 600 °C - introduced into the choke area, which is preferably a cylindrical structure also called "choke area";
(iii) the formation of the carbon black takes place in the reaction tunnel, said tunnel has preferably a length of about 3 to about 20 m and preferably from about 5 to about 15 m and can be shaped as a Venturi;
(iv) the carbon black formed in the reaction tunnel is cooled in the terminating zone, effected by introducing water or any other substance as quenching agent or by means of at least one heat exchanger;
(v) at least a part of the oxidant and/or the fuel component is subjected to pre-heating in a pre-heating device before being introduced into the pre-combustion chamber, said pre-heating device being preferably an electric pre-heating device which is preferably operated at a temperature ranging from about 200 to about 2,400 °C releasing the pre-heated oxidant and or fuel component with a temperature from about 300 to about 1,300 °C, and preferably from about 1,100 to about 1,200 °C;
(vi) at least part of the oxidant and/or fuel component is warmed up by transferring thermal energy from the same or another industrial process by means of a heat exchanger before subjected to pre-heating in the pre-heating device.

Heat exchange may take place using any industrial stream, but preferably said at least part of the gas streams send to the pre-combustor is warmed up by transferring thermal energy from the hot carbon black leaving the terminating zone by means of a heat exchanger. By this means the stream is warmed up to a temperature ranging from about 650 to about 950 °C before entering the pre-heating device.

Basically, any pre-heating device that is capable of heating any of the process' streams within a reasonable time on temperatures to at least 1,000 °C is suitable to be used in the process of the invention. Particular useful are powder-metallurgical heating systems arranged in ceramic tubes, since they support the combustion reach the required operating temperatures of at least 2,000 up to 2,400 °C. Such pre-heating devices based on tube bundle heating elements are for example disclosed in HEAT TREATMENT, p-49-51 (2016).

Since in many plants more electrical energy is produced than consumed the use of electric pre-heating devices is particularly preferred.

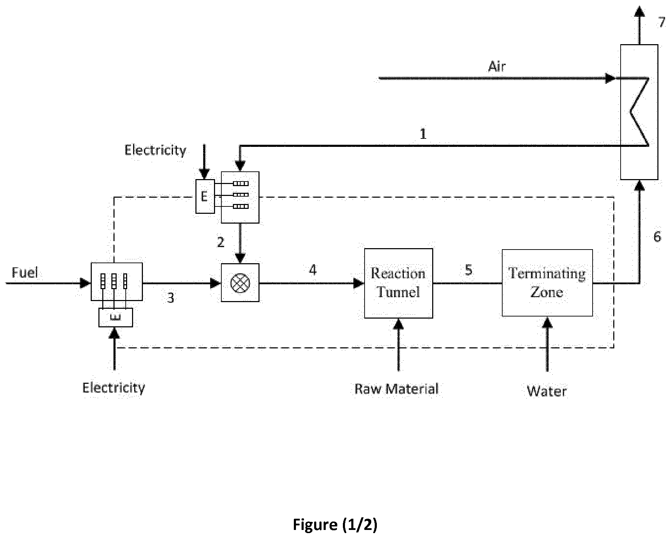

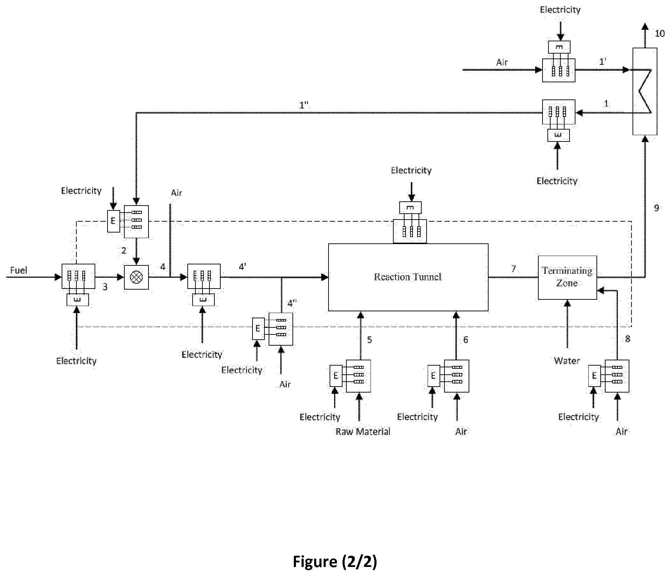

The process is in more detail described in the drawings. **Figure 1** depicts the process as described above, while **Figure 2** shows an alternative including more than one pre-heating devices. One preferable embodiment consists of an additional preheating device to be used to pre-heat oxidants introduced into the reaction tunnel

Another preferable embodiment consists of an additional preheating device to pre-heat reaction gases introduced into the area behind the terminating zone.

Another preferable embodiment consists of an additional preheating device to be used to pre-heat raw material introduced into the reactor.

### CARBON BLACK AND ITS INDUSTRIAL APPLICATION

The carbon black composition obtained or obtainable according to the process as described above shows an advantageous porosity which is expressed as the relation between BET surface area to STSA surface area of the carbon black. The carbon black obtainable or obtained according to the present invention is characterized by
- a STSA surface area of 130 m²/g to 350 m²/g
- wherein the ratio of BET surface area to STSA surface area is less than 1.1 and preferably less than 1.0 and more preferably less than 0.9 if the STSA surface area is in the range of 130 m²/g to 150 m²/g,
- the ratio of BET surface area to STSA surface area is less than 1.2, preferably less than 1.1 and more preferably less than 1.0 if the STSA surface area is greater than 150 m²/g to 180 m²/g,
- the ratio of BET surface area to STSA surface area is less than 1.3, preferably less than 1.2 and more preferably less than 1.0 if the STSA surface area is greater than 180 m²/g;
provided that the STSA surface area and the BET surface area are measured according to ASTM D 6556.

The carbon black obtained according to the process of the invention can be used as an additive for pigments, polymers, particularly rubbers and tires.

### PIGMENT APPLICATIONS

The carbon black obtained according to the present invention can serve as a pigment, in particular as a black pigment for various purposes such as paints and lacquers.

Carbon black represents the ideal black pigment because it is lightfast, resistant to chemical attack and shows a deep black color that makes it superior to other inorganic pigments, such as iron oxides. It is mainly used for two applications, pure black coatings, for which the jetness is the dominating parameter, and gray coatings and paints, for which the tinting strength is more important. The first category includes carbon black pigments mainly with small primary particle sizes, and the second one with medium to large particle sizes. The primary purpose of black and gray coatings is decoration and protection. In black coatings, i.e. mass tone coloration, the fine particle size blacks show a bluish undertone whereas coarse blacks exhibit a brownish undertone. Deep black coatings are predominantly demanded from the automobile and furniture industry. However, carbon blacks which exhibit a pronounced blue undertone are even more requested. This is due to the fact that a bluish black is seen to be darker than one with a brownish undertone. Up to now this could be only fulfilled by producing carbon blacks with ever more smaller sizes. Because aggregates are the smallest dispersible units the ASD also has an impact on the jetness (blackness) and particularly on the undertone (more bluish). The narrower the ASD in particular the more symmetrical the ASD the less the number of coarse particles (aggregates) and hence the more bluish the undertone.

As black pigments for deep coloring of plastics mainly carbon blacks of the high colour (HC) and medium color (MC) class are used. These blacks are found in a great variety of end products such as paneling, casings, fibbers, sheeting, footwear etc., many of them being injection molded articles. To increase the jetness of a polymer as determined by the blackness M_{y} one can use a carbon black with smaller sizes of primary particles, low structure blacks or increase the carbon black concentration. Using the first two options the dispersion of the carbon blacks becomes more difficult and can lead to the opposite effect. The concentration of carbon blacks in polymers can be increased only to a certain amount in practice because the mechanical properties of many plastics are usually adversely affected at higher concentrations. Carbon blacks offering a narrow in particular a more symmetrical ASD led to a higher jetness in polymers without worsen the mechanical properties or decreasing the dispersion behavior.

In inkjet ink application the trend is towards smaller droplets, which requires print-head nozzles with diameters of just a few micrometers. Prevention of nozzle clogging and deposits on the print-head are essential to ensure long-term print reliability. Particle fineness (aggregates) of the pigment is one of the key roles to fulfil these requirements in print reliability. Especially few amounts of coarser particles influence the filtration properties as well as the printability of final pigmented inkjet inks. The more narrow the ASD the less the amount of coarse particles (aggregates) and hence the lower risk of print unreliability.

The carbon black may be present in said pigment compositions in amounts of from about 0.3 to about 45 % b.w., preferably about 1 to about 25 % b.w.

### ADDITIVES FOR POLYMER COMPOSITIONS

Although a polymer comprising the low porous carbon blacks obtained by the process according to the present invention may encompass a variety of different types, such as polyethylene, polypropylene, polystyrene, polyesters, polyurethanes and the like, the preferred polymer is a synthetic or natural rubber.

Natural rubber, coming from latex of *Havea Brasiliensis,* is mainly poly-cis-isoprene containing traces of impurities like protein, dirt etc. Although it exhibits many excellent properties in terms of mechanical performance, natural rubber is often inferior to certain synthetic rubbers, especially with respect to its thermal stability and its compatibility with petroleum products.

Synthetic rubber is made by the polymerization of a variety of petroleum-based precursors called monomers. The most prevalent synthetic rubbers are styrene-butadiene rubbers (SBR) derived from the copolymerization of styrene and 1,3-butadiene. Other synthetic rubbers are prepared from isoprene (2-methyl-1,3-butadiene), chloroprene (2-chloro-1,3-butadiene), and isobutylene (methylpropene) with a small percentage of isoprene for-cross-linking. These and other monomers can be mixed in various proportions to be copolymerized to produce products with a wide range of physical, mechanical, and chemical properties. The monomers can be produced pure and the addition of impurities or additives can be controlled by design to give optimal properties. Polymerization of pure monomers can be better controlled to give a desired proportion of *cis* and *trans* double bonds. With respect to polymers of the synthetic or natural rubber type, another object of the present invention is a method for improving wear resistance and reinforcement, and of such polymer compositions.

The invention also encompasses the use of such carbon black compositions for achieving said effect when added to a rubber composition. The amounts of carbon black to be added to a polymer in general and particularly to a rubber ranges from about 10 to about 120 phr¹, preferably about 35 to about 100 phr and more preferably about 40 to 60 phr.
¹ phr = parts per hundred parts rubber

### POLYMER COMPOSITIONS, RUBBER COMPOSITIONS AND FINAL PRODUCTS

The polymers incorporating the carbon blacks according to the present invention may be selected from the group consisting of polyethylene, polypropylene, polystyrene, polyesters, polyurethanes, but preferably the polymer is either a synthetic or natural rubber. The carbon black may be present in said compositions in amounts of from about 0.3 to about 45 % b.w., preferably about 1 to about 25 % b.w.

In case, the polymer composition is a rubber composition that is designated to deal as a basis for tires, such compositions generally comprise elastomer compositions, reinforcing fillers and partly silane coupling agents. The compositions may be cured using a sulphur vulcanizing agent and various processing aids, including accelerators.

### Rubbers

Any conventionally used rubber compounding elastomer is potentially suitable for the compositions comprising the carbon black obtained from the process according to the present invention. Non-limiting examples of elastomers potentially useful in the exemplary composition include the following, individually as well as in combination, according to the desired final viscoelastic properties of the rubber compound: natural rubber, polyisoprene rubber, styrene butadiene rubber, polybutadiene rubber, butyl rubbers, halobutyl rubbers, ethylene propylene rubbers, cross linked polyethylene, neoprenes, nitrile rubbers, chlorinated polyethylene rubbers, silicone rubbers, specialty heat and oil resistant rubbers, other specialty rubbers, and thermoplastic rubbers, as such terms are employed in The Vanderbilt Rubber Handbook, Thirteenth Edition, (1990). These elastomers may contain a variety of functional groups, including, but not limited to tin, silicon, and amine containing functional groups.

The ratios of such polymer blends can range across the broadest possible range according to the final viscoelastic properties desired for the polymerized rubber compound. One skilled in the art, without undue experimentation, can readily determine which elastomers and in what relative amounts are appropriate for a resulting desired viscoelastic property range. The rubber compositions may include
- liquid hydroxyl terminated polyalkylenes;
- halogenated co-polymers of isobutylene and p-methylstyrene, or both;
- EPDM-based rubbers;
- halogenated co-polymers of isoolefin and para-alkylstyrene;
- styrene- butadiene rubbers, including high trans styrene-butadiene rubbers and/or
- high vinyl polybutadiene elastomers.

### Reinforcing fillers

Typically, the rubber compositions are compounded with reinforcing fillers, including carbon black and silica. The carbon black may be present in amounts ranging from about 10 to about 120 phr, or from about 35 to about 100 phr or from about 40 to about 60 phr. The carbon blacks may be in pelletized form or an unpelletized flocculent mass.

Examples of suitable silica reinforcing fillers include, but are not limited to, hydrated amorphous silica, precipitated amorphous silica, wet silica (hydrated silicic acid), dry silica (anhydrous silicic acid), fumed silica, calcium silicate, and the like.

### Rubber compounding components

**Processing aids.** The rubber composition may be compounded by, for example, mixing the various sulphur-vulcanizable constituent rubbers with various commonly used additive materials such as, for example, curing aids such as sulphur, activators, retarders, and accelerators, processing additives, such as oils, resins including tackifying resins, silicas, and plasticizers, fillers, pigments, fatty acid, zinc oxide, waxes, antioxidants and antiozonants, peptizing agents, and reinforcing materials such as, for example, carbon black.

An amount of processing aids may be from about 0 to about 10 phr. Such processing aids may include, for example, aromatic, naphthenic, and/or paraffinic processing oils. Typical amounts of antioxidants may comprise from about 1 to about 5 phr. Representative antioxidants may be, for example, diphenyl-p-phenylenediamine, TMQ, and others such as, for example, those disclosed in The Vanderbilt Rubber Handbook (1978), pages 344-346. Typical amounts of antiozonants, such as N-(1,3-dimethylbutyl)-N'-phenyl-1,4-benzene diamine (6PPD), may comprise from about 1 to 5 phr. Typical amounts of fatty acids, if used, which can include stearic acid, may comprise from about 0,5 to about 3 phr. Typical amounts of zinc oxide may comprise from about 1 to about 5 phr. Typical amounts of waxes may comprise from about 1 to about 5 phr. Often microcrystalline waxes are used. Typical amounts of peptizers may comprise from about 0,1 to about 1 phr. Typical peptizers may be, for example, penta-chlorothiophenol and dibenzamidodiphenyl disulphide. Process aids, such as phenolic resin (about 2 phr) and C5 aliphatic HC resin (about 5 phr) (tackifiers) may also be useful.

**Vulcanization agents.** The vulcanization may be conducted in the presence of a sulphur vulcanizing agent. Examples of suitable sulphur vulcanizing agents include elemental sulphur (free sulphur) or sulphur donating vulcanizing agents, for example, an amine disulphide, polymeric polysulphide, or sulphur olefin adducts. Sulphur vulcanizing agents may be used in an amount ranging from about 0.5 to about 8 phr.

**Accelerators.** Accelerators are used to control the time and/or temperature required for vulcanization and to improve the properties of the vulcanizate. In one embodiment, a single accelerator system may be used, i.e., a primary accelerator. A primary accelerator is used in total amounts ranging from about 0.5 to about 4 phr. In another embodiment, combinations of a primary and a secondary accelerator might be used with the secondary accelerator being used in smaller amounts (of about 0.05 to about 3 phr) in order to activate and to improve the properties of the vulcanizate. In addition, delayed action accelerators may be used which are not affected by normal processing temperatures, but produce a satisfactory cure at ordinary vulcanization temperatures. Vulcanization retarders might also be used. Suitable types of accelerators that may be used are amines, disulphides, guanidines, thioureas, thiurams, sulphonamides, dithiocarbamates, xanthates, and sulphenamides. The primary accelerator may also be a thiazole, such as a benzothiazole-based accelerator. Exemplary benzothiazole-based accelerators may include N-cyclohexyl-2-benzothiazole sulphonamide (CBS), N-tert-butyl-2-benzothiazole sulphenamide (TBBS), 4-oxydiethylene-2-benzothiazole sulphenamide (OBTS), N,N'-dicyclohexyl-2-benzothiazole sulphenamide (OCBS), 2-mercaptobenzothiazole (MBT), and dibenzothiazole disulphide (MBTS), and may be present in an amount of from about 0.8 to about 1.2 phr. In one embodiment, the amount of the benzothiazole accelerator may be from about 30 to about 60 % b.w. of the sulphur vulcanizing agent.

### Pneumatic tires

A carbon black composition or a rubber composition that comprises said carbon black composition obtained according to the process of the present invention can serve as an additive for making pneumatic tires. Preferably, said tire is a bus tire or a truck tire. The pneumatic tires improved wear resistance and low heat build-up by using the aforementioned carbon black compositions and/or rubber compositions comprising said carbon black compositions for the tire tread in a tread portion. Moreover, the pneumatic tires show a conventionally known structure which can be manufactured by the usual method. Also, as a gas filled in the pneumatic tire according to the embodiment can be used air or air having an adjusted oxygen partial pressure but also an inert gas such as nitrogen, argon, helium or the like.

As an example of the pneumatic tire is preferably mentioned a pneumatic tire comprising a pair of bead portions, a carcass torpidly extending between the bead portions, a belt hooping a crown portion of the carcass and a tread, or the like. The pneumatic tire according to the embodiment of the invention may have a radial structure or a bias structure.

The structure of the tread is not particularly limited, and may have a one-layer structure or a multi-layer structure or a so-called cap-base structure constituted with an upper-layer cap portion directly contacting with a road surface and a lower-layer base portion arranged adjacent to the inner side of the cap portion in the pneumatic tire. In this embodiment, it is preferable to form at least the cap portion with the rubber composition according to the embodiment of the invention. The pneumatic tire according to the embodiment is not particularly limited in the manufacturing method and can be manufactured, for example, as follows. That is, the rubber composition according to the above embodiment is first prepared, and the resulting rubber composition attached onto an uncured base portion previously attached to a crown portion of a casing in a green pneumatic tire, and then vulcanization-built in a given mold under predetermined temperature and pressure.

## Claims

1. A process for obtaining a carbon black composition, comprising or consisting of the following steps:
(A) subjecting a hydrocarbon raw material into a high temperature combustion gas stream in order to achieve thermochemical decomposition,
(B) cooling the reaction gases and
(C) recovering of the carbon black thus obtained,
wherein
said combustion gas stream consists of at least one oxidant and at least one fuel component,
(i) at least a part of said oxidant and/or said fuel component is subjected to an electrical pre-heating step before it is introduced into the pre-combustion chamber to form a high temperature combustion gas stream;
(ii) said high-temperature combustion gas stream of step (i) is transferred into a choke area for combustion; and
(iii) and the combustion products obtained in step (ii) are transferred into a reaction tunnel including a terminating zone to form carbon black particles to be recovered,
and wherein the process is conducted in the furnace reactor according to Claim 11.

2. The process of Claim 1, wherein said oxidants are gaseous components selected from the group consisting of oxygen, ozone, hydrogen peroxide, nitric acid, nitrogen dioxide or nitrous oxide or oxidant-containing gas stream encompassing air, oxygen-depleted or oxygen enriched air, oxygen, ozone, a gas mixture of hydrogen peroxide and air and/or nitrogen, a gas mixture of nitric acid and air and/or nitrogen, a gas mixture of nitrogen dioxide or nitrous oxide and air and/or nitrogen, and a gas mixture of combustion products of hydrocarbons and oxidants.

3. The process of Claim 1 or 2, wherein said fuel components are gaseous components selected from the group consisting of hydrocarbon, hydrogen, carbon monoxide, natural gas, coal gas, petroleum gas, a petroleum type liquid fuel such as heavy oil, or a coal type liquid fuel such as creosote oil.

4. The process of any of Claims 1 to 3, wherein said hydrocarbon raw material is selected from the group consisting of aromatic hydrocarbon encompassing anthracene, CTD (Coal Tar Distillate), ECR (Ethylene Cracker Residue) or petroleum type heavy oils encompassing FCC oil (fluidized catalytic decomposition residual oil) which also can be preheated electrically.

5. The process of any of the precedent Claims 1 to 4, wherein the oxidant and the fuel component are introduced into the pre-combustion chamber, and said chamber is operated at a temperature ranging from about 1,000 to about 2,500 °C to produce a high temperature combustion gas stream.

6. The process of any of the precedent claims 1 to 5, wherein pre-heated oxidant and/orfuel component leaves the pre-heating device with a temperature ranging from about 300 to about 1,300 °C.

7. The process of any of the precedent Claims 1 to 6, wherein the formation of the carbon black takes place in the reaction tunnel, said tunnel representing or opening into a Venturi tunnel.

8. The process of any of the precedent claims 1 to 7, wherein the carbon black formed in the reaction tunnel is cooled in the terminating zone, effected by introducing water as quenching agent or by means of at least one heat exchanger.

9. The process of any of the precedent claims 1 to 8, wherein said at least part of the oxidant and/or fuel component prior to the pre-heating in the pre-heating device is warmed up by transferring thermal energy from the same or another industrial process by means of a heat exchanger.

10. The process of Claim 9, wherein said at least part of the oxidant and/or fuel component prior to the pre-heating in the pre-heating device is warmed up by transferring thermal energy from the hot material stream (consisting of carbon black and tail gas) leaving the terminating zone by means of a heat exchanger.

11. A furnace reactor for producing carbon black, comprising or consisting of the following elements:
- a pre-combustion chamber;
- a choke area;
- a reaction tunnel;
- a terminating zone;
- at least one electrical preheating device, and
- a heat exchanger,
wherein
(a) the pre-combustion chamber contains inlets for oxidants and fuel components, is capable for producing hot combustion gases and is connected to the choke area;
(b) the choke area contains at least one inlet for the hydrocarbon raw material and is connected to the reaction tunnel;
(c) the reaction zone is capable of forming the carbon black aggregates and is connected to the terminating zone,
(d) the terminating zone contains
(d1) at least one, preferably two, three, four or a multitude of nozzles for introducing the quenching agent or
(d2) is connected to at least one heat exchanger,
and is capable of cooling the carbon black aggregates,
(e) the outlet of the terminating zone is connected with a heat exchanger capable of transferring at least part of the thermal energy of the carbon black to the oxidant/and or fuel component to warm them up;
(f) said warmed stream of oxidants and/or fuel components is introduced into a pre-heating device, preferably an electric pre-heating device to be heated before being introduced into the pre-combustion chamber; and optionally,
(g) at least one additional pre-heating device is present for pre-heating
(g1) the hydrocarbon material before introduction into the choke area and/or
(g2) the reaction gases after leaving the pre-combustion chamber and before entering the terminating zone;
(h) preheated reaction gases introduced into the reaction tunnel, and
(i) preheated reaction gases introduced into the area behind the terminating zone.

## Patentansprüche

1. Verfahren zur Herstellung einer Ruß-Zusammensetzung, umfassend oder bestehend aus den folgenden Schritten:
(A) Einsetzen eines Kohlenwasserstoff-Rohmaterials in einen Hochtemperatur-Verbrennungsgasstrom, um eine thermochemische Zersetzung zu erreichen,
(B) Abkühlen der Reaktionsgase und
(C) Gewinnung des so erhaltenen Rußes,
wobei
der Verbrennungsgasstrom aus mindestens einem Oxidationsmittel und mindestens einer Brennstoffkomponente besteht,
(i) zumindest ein Teil des Oxidationsmittels und/oder der Brennstoffkomponente einem elektrischen Vorwärmschritt unterzogen wird, bevor er in die Vorverbrennungskammer eingeleitet wird, um einen Hochtemperatur-Verbrennungsgasstrom zu bilden;
(ii) der Hochtemperatur-Verbrennungsgasstrom aus Schritt (i) wird zur Verbrennung in einen Drosselbereich geleitet; und
(iii) und die in Schritt (ii) erhaltenen Verbrennungsprodukte in einen Rückkopplungstunnel mit einer Endzone überführt werden, um Rußpartikel zu bilden, die zurückgewonnen werden sollen,
und wobei das Verfahren in dem Ofenreaktor nach Anspruch 11 durchgeführt wird.

2. Verfahren nach Anspruch 1, wobei die Oxidationsmittel gasförmige Komponenten sind, die aus der Gruppe ausgewählt sind, die aus Sauerstoff, Ozon, Wasserstoffperoxid, Salpetersäure, Stickstoffdioxid oder Distickstoffoxid oder einem oxidationsmittelhaltigen Gasstrom besteht, der Luft, sauerstoffarme oder sauerstoffangereicherte Luft umfasst, Sauerstoff, Ozon, ein Gasgemisch aus Wasserstoffperoxid und Luft und/oder Stickstoff, ein Gasgemisch aus Salpetersäure und Luft und/oder Stickstoff, ein Gasgemisch aus Stickstoffdioxid oder Distickstoffoxid und Luft und/oder Stickstoff sowie ein Gasgemisch aus Verbrennungsprodukten von Kohlenwasserstoffen und Oxydationsmitteln.

3. Verfahren nach Anspruch 1 oder 2, wobei es sich bei den Brennstoffkomponenten um gasförmige Bestandteile handelt, die aus der Gruppe ausgewählt sind, die aus Kohlenwasserstoff, Wasserstoff, Kohlenmonoxid, Erdgas, Kohlegas, Erdölgas, einem flüssigen Brennstoff vom Erdöltyp, wie Schweröl, oder einem flüssigen Brennstoff vom Kohletyp, wie Kreosotöl, besteht.

4. Verfahren nach einem der Ansprüche 1 bis 3, wobei das Kohlenwasserstoff-Rohmaterial aus der Gruppe ausgewählt wird, die aus aromatischem Kohlenwasserstoff, einschließlich Anthracen, CTD (Coal Tar Distillate), ECR (Ethylene Cracker Residue) oder erdölartigen Schwerölen, einschließlich FCC-Öl (Fluidized Catalytic Decomposition Residual Oil), das auch elektrisch vorgeheizt werden kann, besteht.

5. Verfahren nach einem der vorhergehenden Ansprüche 1 bis 4, bei dem das Oxidationsmittel und die Brennstoffkomponente in die Vorverbrennungskammer eingeführt werden und die Kammer bei einer Temperatur im Bereich von etwa 1.000 bis etwa 2.500 °C betrieben wird, um einen Hochtemperatur-Verbrennungsgasstrom zu erzeugen.

6. Verfahren nach einem der vorhergehenden Ansprüche 1 bis 5, bei dem das vorgewärmte Oxidationsmittel und/oder die Brennstoffkomponente die Vorwärmvorrichtung mit einer Temperatur im Bereich von etwa 300 bis etwa 1.300 °C verlässt.

7. Verfahren nach einem der vorhergehenden Ansprüche 1 bis 6, bei dem die Bildung des Rußes im Reaktionstunnel stattfindet, wobei der Tunnel einen Venturi-Tunnel darstellt oder sich zu einem solchen öffnet.

8. Verfahren nach einem der vorhergehenden Ansprüche 1 bis 7, **dadurch gekennzeichnet, dass** der im Reaktionstunnel gebildete Ruß in der Abschlusszone gekühlt wird, was durch Einleiten von Wasser als Abschreckmittel oder mittels mindestens eines Wärmetauschers erfolgt.

9. Verfahren nach einem der vorhergehenden Ansprüche 1 bis 8, **dadurch gekennzeichnet, dass** zumindest ein Teil der Oxidationsmittel- und/oder Brennstoffkomponente vor der Vorwärmung in der Vorwärmeinrichtung durch Übertragung von Wärmeenergie aus demselben oder einem anderen industriellen Prozess mittels eines Wärmetauschers erwärmt wird.

10. Verfahren nach Anspruch 9, bei dem zumindest ein Teil des Oxidationsmittels und/oder der Brennstoffkomponente vor dem Vorheizen in der Vorheizvorrichtung durch Übertragung von Wärmeenergie aus dem heißen Materialstrom (bestehend aus Ruß und Erdgas), der die Endzone verlässt, mittels eines Wärmetauschers erwärmt wird.

11. Ofenreaktor zur Herstellung von Ruß, der die folgenden Elemente umfasst oder aus ihnen besteht:
- eine Vorverbrennungskammer;
- einen Drosselbereich;
- einen Reaktionstunnel;
- eine Endzone;
- mindestens eine elektrische Vorwärmeinrichtung, und
- einen Wärmetauscher,
wobei
(a) die Vorverbrennungskammer Einlässe für Oxidationsmittel und Brennstoffbestandteile enthält, heiße Verbrennungsgase erzeugen kann und mit dem Drosselbereich verbunden ist;
(b) der Drosselbereich mindestens einen Einlass für den Kohlenwasserstoffrohstoff enthält und mit dem Reaktionstunnel verbunden ist;
(c) die Reaktionszone ist in der Lage, die Ruß-Aggregate zu bilden, und ist mit der Endzone verbunden,
(d) die Abschlusszone enthält
(d1) mindestens eine, vorzugsweise zwei, drei, vier oder eine Vielzahl von Düsen zur Einbringung des Abschreckmittels oder
(d2) mit mindestens einem Wärmetauscher verbunden ist, und ist in der Lage, die Ruß-Aggregate zu kühlen,
(e) der Ausgang der Endzone mit einem Wärmetauscher verbunden ist, der in der Lage ist, zumindest einen Teil der Wärmeenergie des Rußes auf die Oxidationsmittel- und/oder Brennstoffkomponente zu übertragen, um diese zu erwärmen;
(f) der erwärmte Strom von Oxidationsmitteln und/oder Brennstoffkomponenten wird in eine Vorheizvorrichtung, vorzugsweise eine elektrische Vorheizvorrichtung, eingeleitet, um erwärmt zu werden, bevor er in die Vorverbrennungskammer eingeleitet wird; und optional,
(g) mindestens eine zusätzliche Vorheizeinrichtung vorhanden ist zum Vorheizen
(g1) des Kohlenwasserstoffmaterials vor der Einleitung in den Drosselbereich und/oder
(g2) der Reaktionsgase nach dem Verlassen der Vorverbrennungskammer und vor dem Eintritt in die Endzone;
(h) vorgewärmte Reaktionsgase, die in den Reaktionstunnel eingeleitet werden, und
(i) vorgewärmte Reaktionsgase, die in den Bereich hinter der Abschlusszone eingeleitet werden.

## Revendications

1. Procédé de production d'une composition de noir de carbone comprenant ou consistant en les étapes suivantes :
(A) l'introduction d'une matière première hydrocarbonée dans un courant de gaz de combustion à haute température pour obtenir une décomposition thermochimique,
(B) refroidissement des gaz de réaction, et
(C) récupération du noir de carbone ainsi obtenu,
où
le courant de gaz de combustion est constitué d'au moins un oxydant et d'au moins un composant combustible,
(i) au moins une partie de l'oxydant et/ou du composant combustible est soumise à une étape de préchauffage électrique avant d'être introduite dans la chambre de précombustion pour former un courant de gaz de combustion à haute température;
(ii) le flux de gaz de combustion à haute température de l'étape (i) est dirigé vers une zone d'étranglement pour la combustion ; et
(iii) et les produits de combustion obtenus à l'étape (ii) sont transférés dans un tunnel de rétroaction ayant une zone terminale pour former des particules de suie à récupérer,
et dans lequel le procédé est mis en oeuvre dans le réacteur à four selon la revendication 11.

2. Procédé selon la revendication 1, dans lequel les agents oxydants sont des composants gazeux choisis dans le groupe constitué par l'oxygène, l'ozone, le peroxyde d'hydrogène, l'acide nitrique, le dioxyde d'azote ou l'oxyde nitreux, ou un courant gazeux contenant des agents oxydants comprenant de l'air, de l'air appauvri en oxygène ou de l'air enrichi en oxygène, l'oxygène, l'ozone, un mélange gazeux de peroxyde d'hydrogène et d'air et/ou d'azote, un mélange gazeux d'acide nitrique et d'air et/ou d'azote, un mélange gazeux de dioxyde d'azote ou d'oxyde nitreux et d'air et/ou d'azote, ainsi qu'un mélange gazeux de produits de combustion d'hydrocarbures et d'agents d'oxydation.

3. Procédé selon la revendication 1 ou 2, dans lequel les composants du combustible sont des composants gazeux choisis dans le groupe constitué par l'hydrogène carbonique, l'hydrogène, le monoxyde de carbone, le gaz naturel, le gaz de houille, le gaz de pétrole, un combustible liquide de type pétrolier, tel que le fioul lourd, ou un combustible liquide de type charbonnier, tel que le fioul créosoté.

4. Procédé selon l'une quelconque des revendications 1 à 3, dans lequel la matière première hydrocarbonée est choisie dans le groupe constitué par les hydrocarbures aromatiques, y compris l'anthracène, le distillat de tartre de charbon (CTD), le résidu de craquage d'éthylène (ECR) ou les huiles lourdes de type pétrolier, y compris l'huile résiduelle de décomposition catalytique fluidisée (FCC), qui peut également être préchauffée électriquement.

5. Procédé selon l'une quelconque des revendications précédentes 1 à 4, dans lequel l'oxydant et le composant combustible sont introduits dans la chambre de précombustion et la chambre fonctionne à une température comprise entre environ 1000 et environ 2500°C pour produire un flux de gaz de combustion à haute température.

6. Procédé selon l'une quelconque des revendications précédentes 1 à 5, dans lequel le comburant et/ou le composant combustible préchauffé sortent du dispositif de préchauffage à une température comprise entre environ 300 et environ 1300°C.

7. Procédé selon l'une quelconque des revendications précédentes 1 à 6, dans lequel la formation du noir de carbone a lieu dans le tunnel de réaction, ledit tunnel étant un tunnel de type venturi ou s'ouvrant sur un tel tunnel.

8. Procédé selon l'une quelconque des revendications précédentes 1 à 7, **caractérisé en ce que** les suies formées dans le tunnel de réaction sont refroidies dans la zone de fermeture, ce qui est réalisé par introduction d'eau comme agent de trempe ou au moyen d'au moins un échangeur de chaleur.

9. Procédé selon l'une quelconque des revendications précédentes 1 à 8, **caractérisé en ce qu'**au moins une partie du composant oxydant et/ou combustible est chauffée avant le préchauffage dans le dispositif de préchauffage par transfert d'énergie thermique provenant du même procédé industriel ou d'un autre procédé industriel au moyen d'un échangeur de chaleur.

10. Procédé selon la revendication 9, dans lequel au moins une partie du composant oxydant et/ou du composant combustible est chauffée avant le préchauffage dans le dispositif de préchauffage par transfert d'énergie thermique à partir du flux de matériau chaud (composé de noir de carbone et de gaz naturel) quittant la zone finale, au moyen d'un échangeur de chaleur.

11. Réacteur à four pour la production de noir de carbone, comprenant ou consistant en les éléments suivants :
- une chambre de précombustion ;
- une zone d'étranglement ;
- un tunnel de réaction ;
- une zone finale ;
- au moins un dispositif de préchauffage électrique, et
- un échangeur de chaleur,
où
(a) la chambre de précombustion contient des entrées pour les oxydants et les résidus de combustible, peut produire des gaz de combustion chauds et est reliée à la zone d'étranglement ;
(b) la zone d'étranglement contient au moins une entrée pour la matière première hydrocarbonée et est reliée au tunnel de réaction ;
(c) la zone de réaction est capable de former les agrégats de noir de carbone et est reliée à la zone terminale,
(d) la zone finale contient
(d1) au moins une, de préférence deux, trois, quatre ou une pluralité de buses pour l'introduction de l'agent de trempe, ou
(d2) est reliée à au moins un échangeur de chaleur,
et est capable de refroidir les agrégats de suie,
(e) la sortie de la zone finale est reliée à un échangeur de chaleur capable de transférer au moins une partie de l'énergie thermique du noir de carbone au composant oxydant et/ou combustible afin de le chauffer;
(f) le flux chauffé d'oxydant et/ou de composant combustible est introduit dans un dispositif de préchauffage, de préférence un dispositif de préchauffage électrique, pour être chauffé avant d'être introduit dans la chambre de précombustion ; et éventuellement,
(g) au moins un dispositif de préchauffage supplémentaire est prévu pour préchauffer
(g1) la matière hydrocarbonée avant son introduction dans la zone d'étranglement et/ou
(g2) les gaz de réaction après leur sortie de la chambre de pré-combustion et avant leur entrée dans la zone finale ;
(h) des gaz de réaction préchauffés introduits dans le tunnel de réaction, et
(i) les gaz de réaction préchauffés introduits dans la zone située en aval de la zone de fermeture.
